# EUROPÄISCHE PATENTSCHRIFT

(11) **EP 2 892 764 B1**
(45) Veröffentlichungstag und Bekanntmachung des Hinweises auf die Patenterteilung: **02.08.2017**
(21) Anmeldenummer: 13753147.1
(22) Anmeldetag: 19.08.2013
(51) Int. Cl.: B60R 21/36, B60R 21/233

(54) **SICHERHEITSVORRICHTUNG FÜR EIN KRAFTFAHRZEUG**
SAFETY DEVICE FOR A MOTOR VEHICLE
DISPOSITIF DE SÉCURITÉ POUR VÉHICULE AUTOMOBILE

(30) Priorität: 03.09.2012 DE 102012215579
(43) Veröffentlichungstag der Anmeldung: 15.07.2015
(73) Patentinhaber: Bayerische Motoren Werke Aktiengesellschaft, 80809 München (DE)
(72) Erfinder: KOESTLER, Ulrich, 85241 Hebertshausen (DE); IVENZ, Udo, 86456 Gablingen (DE); SPRINGSKLEE, Markus, 80638 Muenchen (DE); MEIERHOFER, Walter, 94099 Schmidham (DE); RUDOLPH, Tim, 81543 München (DE)
(86) Internationale Anmeldenummer: PCT/EP2013/067231
(87) Internationale Veröffentlichungsnummer: WO 2014/032999

(56) Entgegenhaltungen:
- JP-A- H04 244 453
- JP-A- 2004 299 517
- JP-A- 2008 149 785

## Beschreibung

Die vorliegende Erfindung betrifft eine Sicherheitsvorrichtung für ein Kraftfahrzeug mit einem aufblasbaren Airbag, der derart angepasst ist, dass er sich im aufgeblasenen Zustand zum Schutz einer aufprallenden Person über eine Außenseite einer Karosserie, insbesondere einer Frontscheibe oder einer A-Säule, des Kraftfahrzeugs erstreckt, sowie eine Steuerung für eine derartige Sicherheitsvorrichtung. Die Sicherheitsvorrichtung ist eine Fußgängerschutzvorrichtung für ein Kraftfahrzeug mit einem aufblasbaren Airbag. Ein derartiger aufblasbarer Airbag ist auch als einen Fußgängerschutzairbag oder Nicht-Insassenschutzairbag bekannt. Beispielsweise ist aus der DE 1005922 A1 eine Sicherheitseinrichtung an einer Fronthaube eines Kraftfahrzeugs zum Schutz von Fußgängern bekannt, bei der ein matratzenartiger, großflächiger Mehrkammer-Haubenairbag vorgesehen ist, der eine untere Hochdruckkammer und eine darüber angeordnete obere Niederdruckkammer aufweist. Die Hochdruckkammer und die Niederdruckkammer sind durch eine im aufgeblasenen Zustand in etwa horizontal verlaufende Trennwand getrennt, in der Überströmöffnungen ausgebildet sind. Im Bereich der Niederdruckkammer sind Niederdruckkammer-Ausströmöffnungen und im Bereich der Hochdruckkammer sind druckgesteuerte Hochdruckkammer-Ausströmöffnungen ausgebildet. Im Falle einer Aktivierung der Sicherheitseinrichtung sind die druckgesteuerten Hochdruckkammer-Ausströmöffnungen beim Einblasen des Gases in die Hochdruckkammer zunächst geschlossen. Die Niederdruckkammer ist mit einem niedrigeren Druck als die Hochdruckkammer aufblasbar, so dass bei einem Aufprall einer Person zunächst wenigstens ein Teil der Aufprallenergie durch die Niederdruckkammer unter Ausströmung von Gas durch die Niederdruckkammer-Ausströmöffnung absorbierbar ist. Ein anderer Teil der Aufprallenergie ist durch die Hochdruckkammer absorbierbar, wobei der Druck in der Hochdruckkammer so hoch ist, dass ein Durchschlagen auf die Fronthaube verhinderbar ist. Die JP2008149785 offenbart eine Sicherheitsvorrichtung gemäß dem Oberbegriff des Anspruchs 1.

Es ist die Aufgabe der vorliegenden Erfindung, eine Sicherheitsvorrichtung für ein Kraftfahrzeug mit einem aufblasbaren Airbag, der derart angepasst ist, dass er sich im aufgeblasenen Zustand zum Schutz einer aufprallenden Person über eine Außenseite einer Karosserie, insbesondere einer Frontscheibe oder einer A-Säule, des Kraftfahrzeugs erstreckt, sowie eine Steuerung für eine derartige Sicherheitsvorrichtung zu schaffen, bei der ein Durchschlagen der aufprallenden Person auf die Außenseite der Karosserie besser verhindert ist.

Diese Aufgabe wird insbesondere durch eine Sicherheitsvorrichtung für ein Kraftfahrzeug mit einem aufblasbaren Airbag mit den Merkmalen von Patentanspruch 1 gelöst. Ferner wird diese Aufgabe durch eine Steuerung für eine derartige Sicherheitsvorrichtung mit den Merkmalen von Anspruch 8 gelöst. Weiterbildungen der vorliegenden Erfindung sind in den abhängigen Patentansprüchen ausgeführt.

Gemäß der vorliegenden Erfindung hat eine Sicherheitsvorrichtung für ein Kraftfahrzeug einen aufblasbaren Airbag, der derart angepasst ist, dass er sich im aufgeblasenen Zustand zum Schutz einer aufprallenden Person, insbesondere eines Fußgängers oder eines Fahrradfahrers, über eine Außenseite einer Karosserie, insbesondere einer Frontscheibe und/oder einer A-Säule, des Kraftfahrzeugs erstreckt. Ferner hat die Sicherheitsvorrichtung einen Gasgenerator zum Aufblasen des Airbags und einen Gasauslass zum Auslassen von Gas aus dem aufgeblasenen Airbag. Der Airbag weist zumindest eine erste Kammer und zumindest eine zweite Kammer auf, die in strömungsmechanischer Verbindung stehen. In der strömungsmechanischen Verbindung ist ein Einwegventil derart angeordnet, dass eine Gasströmung nur von der ersten Kammer in die zweite Kammer möglich ist. Ferner ist der Gasauslass an der ersten Kammer angeordnet.

Eine derartige Fußgängerschutzvorrichtung wird auch Fußgängerschutzairbag oder Nicht-Insassenschutzairbag genannt. Insbesondere erstreckt sich ein derartiger Airbag meist über einen unteren Bereich der Frontscheibe und linke und rechte A-Säulen.

Strömungsmechanische Verbindung bedeutet, dass zwischen der ersten Kammer und der zweiten Kammer eine Gasströmung möglich ist, wobei die Gasströmung im vorliegenden Fall durch das Einwegventil nur in eine Richtung und zwar von der ersten Kammer in die zweite Kammer möglich ist. Ein Einwegventil verhindert im Wesentlichen eine Gasströmung in die andere Richtung, insbesondere wenn beispielsweise ein Druck in der ersten Kammer fällt, bleibt der Druck in der zweiten Kammer bestehen, da kein Druckausgleich bzw. keine Gasströmung durch das Einwegventil von der zweiten in die erste Kammer möglich ist.

Dadurch kann insbesondere, wenn durch den Gasauslass aus der ersten Kammer Gas austritt und damit der Druck in der ersten Kammer sinkt, der Druck in der zweiten Kammer aufrechterhalten bleiben. Hierdurch ist es möglich, einen einzigen Airbag mit mindestens zwei Kammern durch einen einzigen Gasgenerator aufzublasen und gleichzeitig den Druck in der ersten Kammer zu senken, während der Druck in der zweiten Kammer aufrechterhalten bleibt, so dass zwei Kammern mit zwei unterschiedlichen Druckniveaus ausgebildet sind. Durch das Einwegventil ist es besonders gut möglich, den Druck in der zweiten Kammer zu halten, da im Wesentlichen kein Gas durch die strömungsmechanische Verbindung von der zweiten Kammer in die erste Kammer zurückströmen kann. Je nach Dichtigkeit des Einwegventils kann es natürlich zu einer Rückströmung durch das Einwegventil von der zweiten Kammer in die erste Kammer kommen, wobei diese Rückströmung dann aber gegenüber einer in die andere Richtung des Einwegventils mögliche Strömung erheblich geringer ist und der Druck in der zweiten Kammer in einer relevanten Zeitspanne ausreichend hoch bleibt.

Die zweite Kammer kann im Allgemeinen eine Kammer sein, in der ein bestimmtes Druckniveau länger aufrechterlhalten wird, wie in der ersten Kammer.

In dem Gasauslass kann ein gesteuertes Gasauslassventil angeordnet sein.

Gemäß der Erfindung sind die erste Kammer und die zweite Kammer durch eine Trennwand voneinander getrennt sein.

Mit anderen Worten sind die beiden Kammern aneinander liegend ausgebildet sein, wobei diese durch eine Wand voneinander getrennt sind.

Das Einwegventil ist damit in jener Trennwand angeordnet.

Gemäß einer Weiterbildung der Sicherheitsvorrichtung der vorliegenden Erfindung weist der Gasauslass der ersten Kammer ein steuerbares Gasauslassventil auf. Hierdurch ist ein Druck in der ersten Kammer vor und während einem Auftreffen der Person auf den Airbag steuerbar.

Damit kann zum Beispiel bei einer bestimmten Zeit oder bei Überschreitung eines bestimmten Druckniveaus Gas gesteuert aus der ersten Kammer ausgelassen werden. Durch ein gesteuertes Gasauslassen aus der ersten Kammer, kann der Druck oder Druckverlauf in der ersten Kammer optimal für einen Abbau der Aufprallenergie der aufprallenden Person eingestellt werden.

Das steuerbare Gasauslassventil in dem Gasauslass der ersten Kammer kann des Weiteren derart angesteuert werden, dass es nach einer Dämpfung des Aufpralls der Person auf den Airbag geöffnet werden kann, um Restgas aus der ersten Kammer auszulassen.

Hierdurch kann der Airbag, d.h. durch eine entlüftete erste Kammer, einfacher aus einem Sichtbereich des Fahrers geholt werden.

Gemäß einer bevorzugten Weiterbildung der Sicherheitsvorrichtung für ein Kraftfahrzeug gemäß der vorliegenden Erfindung weist die zweite Kammer einen weiteren Gasauslass mit einem weiteren Gasauslassventil auf. Der weitere Gasauslass bzw. das weitere Gasauslassventil der zweiten Kammer ist insbesondere nach einer Dämpfung des Aufpralls der Person auf den Airbag aufmachbar.

Dies ist vorteilhaft, um nach dem Auftreffen der Person, Gas aus der zweiten Kammer auszulassen, so dass der Airbag einfacher aus dem Sichtbereich des Fahrers geholt werden kann.

Der weitere Gasauslass kann auch derart ausgebildet oder angesteuert sein, dass er schon während eines Aufpralls der Person auf den Airbag aufgemacht wird.

Damit kann auch bei einem Auftreffen der Person auf die zweite Kammer ein Rückpralleffekt verhindert werden.

Bevorzugt ist der weitere Gasauslass der zweiten Kammer derart ausgebildet oder angesteuert, dass der weitere Gasauslass zeitlich nach dem Gasauslass der ersten Kammer aufmachbar ist bzw. aufgemacht wird.

Somit kann in der zweiten Kammer länger ein höherer Druck aufrechterhalten werden. Da zwischen der ersten Kammer und der zweiten Kammer das Einwegventil angeordnet ist, kann auch keine Rückströmung von der zweiten Kammer in die erste Kammer stattfinden, so dass dies ebenso zu einer längeren Aufrechterhaltung eines höheren Drucks in der zweiten Kammer beiträgt.

Gemäß einer weiteren Weiterbildung der Sicherheitsvorrichtung der vorliegenden Erfindung sind die erste Kammer und die zweite Kammer zumindest abschnittsweise übereinander parallel zu der Frontscheibe angeordnet.

Mit anderen Worten ist die erste Kammer parallel zu der Frontscheibe angeordnet und die zweite Kammer ist ebenso parallel zu der Frontscheibe angeordnet und zusätzlich sind die erste Kammer und die zweite Kammer übereinander angeordnet. Damit befindet sich zwischen der Frontscheibe und der aufprallenden Person sowohl die erste Kammer als auch die zweite Kammer. Hiermit können beide Kammern Aufgaben zur Energieabsorption der aufprallenden Person übernehmen.

Zumindest abschnittweise bedeutet, dass die Kammern stellenweise nicht übereinander parallel angeordnet sein können.

Sowohl die erste als auch die zweite Kammer kann auf der Seite der Karosserie bzw. der Frontscheibe ausgebildet sein.

Alternativ können die erste Kammer und die zweite Kammer hintereinander parallel zur der Frontscheibe angeordnet sein.

Es ist auch möglich, dass die erste Kammer und die zweite Kammer sowohl hintereinander als auch übereinander angeordnet sind. Dies ist beispielsweise bei einer Anordnung der Fall, bei der die zweite Kammer einen im Wesentlichen L-förmigen Querschnitt aufweist und die erste Kammer zwischen den beiden Schenkeln der zweiten Kammer ausgebildet ist.

Es können auch mehrere erste Kammern und/oder mehrere zweite Kammern vorgesehen sein, wobei die zweiten Kammern geeignet mit den ersten Kammern jeweils zumindest über ein Einwegventil in strömungsmechanischer Verbindung stehen. Insbesondere kann zum Beispiel eine erste Kammer vorgesehen sein, die sich im Wesentlichen über den gesamten abzudeckenden Bereich der Karosserie bzw. Frontscheibe erstreckt, und es können mehrere zweite Kammern vorgesehen sein, die sich über Bereiche der Karosserie erstrecken, an denen ein Durchschlagen der aufprallenden Person wahrscheinlicher ist bzw. ein Durchschlagen größere Folgen hätte. Zum Beispiel kann im Bereich der linken A-Säule eine linke zweite Kammer angeordnet sein und es kann im Bereich der rechten A-Säule eine rechte zweite Kammer angeordnet sein.

Gemäß einer Weiterbeildung mit mehreren zweiten Kammern, können die zweiten Kammern miteinander über Einwegventile verbunden sein.

Gemäß einer Weiterbildung der Sicherheitsvorrichtung für ein Kraftfahrzeug ist ein maximales Volumen der ersten Kammer größer als ein maximales Volumen der zweiten Kammer.

Dies ist insoweit vorteilhaft, da die erste Kammer im Wesentlichen die Energieabsorption der aufprallenden Person übernehmen soll. Die zweite Kammer ist dabei lediglich eine zusätzliche Sicherheitseinrichtung, die bei einem Durchschlagen der aufprallenden Person durch die erste Kammer, bei zu hoher Aufprallenergie, beispielsweise wenn die auftreffende Person zu schwer ist oder die Relativgeschwindigkeit zwischen dem Fahrzeug und der Person zu hoch ist, die zweite Kammer ein Durchschlagen der aufprallenden Person auf ein Karosserieteil bzw. die Frontscheibe verhindern soll. Dies ist insbesondere dann vorteilhaft, wenn ein Druck in der ersten Kammer, um die Energieabsorption zu optimieren, über das gesteuerte Gasauslassventil in dem Gasauslass gesteuert ist

Gemäß einer Weiterbildung der Sicherheitsvorrichtung gemäß der vorliegenden Erfindung ist die zweite Kammer im Wesentlichen oder nur über das Einwegventil mit Gas befüllbar.

Mit im Wesentlichen ist gemeint, dass ein Großteil der Befüllung der zweiten Kammer über das Einwegventil erfolgt. Eine direkte Befüllung der zweiten Kammer mit Gas aus dem Gasgenerator oder über eine weitere strömungsmechanische Verbindung zwischen der ersten Kammer und der zweiten Kammer kann grundsätzlich möglich sein. Eine Rückströmung sollte über das Einwegventil zumindest zum größeren Teil verhindert sein, so dass in der zweiten Kammer jeweils ein höherer Druck als in der ersten Kammer zumindest in dem Zeitraum, in dem sich ein Aufprall ereignet, sichergestellt ist. Dies ist insbesondere vorteilhaft, wenn ein Druck in der ersten Kammer, um die Energieabsorption zu optimieren, über das gesteuerte Gasauslassventil in dem Gasauslass gesteuert ist.

Ferner können bei der Sicherheitsvorrichtung für ein Kraftfahrzeug gemäß der vorliegenden Erfindung zwei oder mehr Einwegventile in einer strömungsmechanischen Verbindung oder in mehreren strömungsmechanischen Verbindungen zwischen der ersten Kammer und der zweiten Kammer angeordnet sein.

Zur Lösung vorstehender Aufgabe kann eine Steuerung einer Sicherheitsvorrichtung für ein Kraftfahrzeug gemäß der vorliegenden Erfindung derart ausgebildet sein, dass der Airbag bei einer erfassten tatsächlichen Kollision oder einer erfassten bevorstehenden Kollision aufgeblasen wird und der Gasauslass der ersten Kammer geöffnet wird, so dass ein Druckunterschied zwischen der ersten Kammer und der zweiten Kammer entsteht, bevor und/oder während eine Person auf den Airbag aufprallt.

Die Steuerung steuert also den Gasgenerator an und löst diesen aus, wenn eine Kollision oder eine bevorstehende Kollision erfasst ist. Beim Aufblasen des Airbags wird Gas von dem Gasgenerator in die erste Kammer und über die strömungsmechanische Verbindung mit dem Einwegventil in die zweite Kammer geblasen, bis beide Kammern im Wesentlichen aufgeblasen sind. Der Gasauslass der ersten Kammer wird zu einem geeigneten Zeitpunkt geöffnet, so dass aus der ersten Kammer Druck entweicht, wohingegen in der zweiten Kammer ein höherer Druck verbleibt, weil kein Gas durch das Einwegventil von der zweiten in die erste Kammer zurückströmen kann. Dies wird insbesondere derart gesteuert, dass die unterschiedlichen Druckverhältnisse in der ersten Kammer und in der zweiten Kammer zu einem Zeitpunkt herrschen, wenn die Person auf den Airbag aufprallt, so dass die aufprallende Person hinreichend unter Absorption von Aufprallenergie in die erste Kammer eintauchen kann.

Weiterhin kann bei der Steuerung gemäß der vorliegenden Erfindung der Gasauslass abhängig von einer oder mehreren Bedingungen geöffnet werden. Beispielsweise kann der Gasauslass der ersten Kammer zu einem bestimmten Zeitpunkt oder bei Überschreiten eines bestimmten Drucks, z.B. wenn die aufprallende Person den Druck in der ersten Kammer erhöht, geöffnet werden.

In den Figuren:
- Fig. 1: zeigt eine schematische Seitenansicht eines Frontscheibenairbags gemäß einem ersten Ausführungsbeispiel der vorliegenden Erfindung.
- Fig. 2: ist eine schematische Ansicht eines Prinzips des Fußgängerschutzairbags gemäß dem ersten Ausführungsbeispiel der vorliegenden Erfindung.
- Fig. 3: zeigt eine schematische Seitenansicht eines Frontscheibenairbags gemäß einem zweiten Ausführungsbeispiel der vorliegenden Erfindung.
- Fig. 4: zeigt eine schematische Seitenansicht eines Frontscheibenairbags gemäß einem dritten Ausführungsbeispiel der vorliegenden Erfindung.

Nachstehend sind Ausführungsbeispiele unter Bezugnahme auf die Figuren beschrieben.

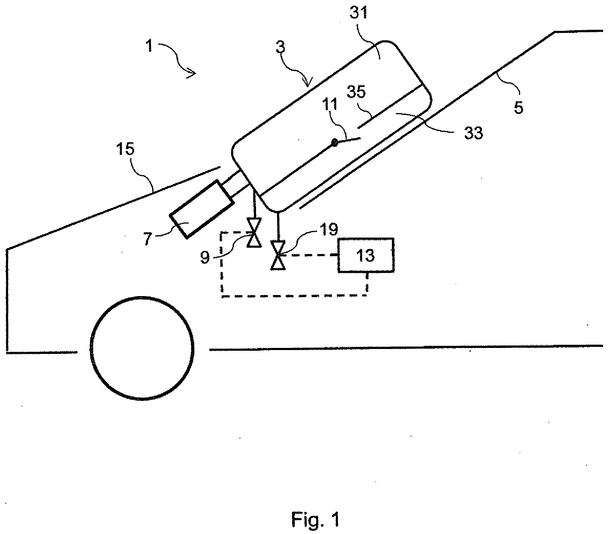

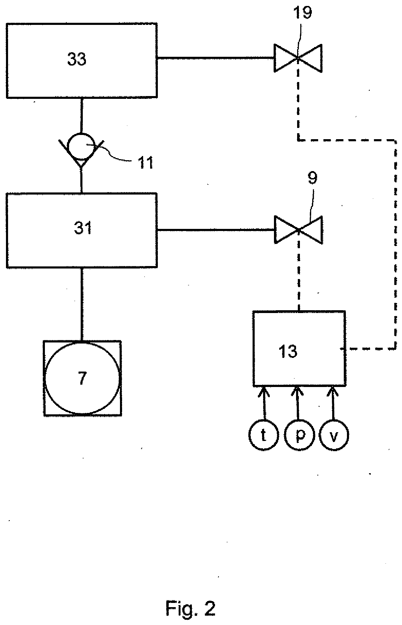

Zunächst folgt unter Bezugnahme auf Figuren 1 und 2 eine Beschreibung eines ersten Ausführungsbeispiels der vorliegenden Erfindung.

In Figur 1 ist ein Frontscheibenairbag 1 als aufblasbarer Airbag einer Sicherheitsvorrichtung für ein Kraftfahrzeug der vorliegenden Erfindung gemäß dem ersten Ausführungsbeispiel schematisch gezeigt.

Der Frontscheibenairbag 3 ist im aufgeblasenen Zustand an einem unteren Bereich einer Frontscheibe 5 ausgebildet. Der Frontscheibenairbag 3 weist eine erste Kammer 31 und eine zweite Kammer 33 auf, die durch eine Trennwand 35 voneinander getrennt sind. Die erste Kammer 31 ist im Wesentlichen parallel zu der Frontscheibe 5 ausgebildet. Die zweite Kammer 33 ist ebenso parallel zu der Frontscheibe ausgebildet, wobei sich die zweite Kammer 33 zwischen der ersten Kammer 31 und der Frontscheibe 5 befindet. Der Airbag 3 ist an einem Gasgenerator 7 angeschlossen, der sich im Bereich eines unteren Endes der Frontscheibe 5 bzw. eines hinteren Endes einer Frontklappe 15 befindet. Der Gasgenerator 7 ist insbesondere mit der ersten Kammer 31 verbunden, so dass generiertes Gas von dem Gasgenerator 7 in die erste Kammer 31 eindringt. Die erste Kammer 31 und die zweite Kammer 33 sind durch eine strömungsmechanische Verbindung miteinander verbunden. In der strömungsmechanischen Verbindung ist ein Einwegventil 11 angeordnet. Das Einwegventil 11 ist so ausgebildet, dass Gas von der ersten Kammer 31 in die zweite Kammer 33 gelangen kann, aber ein Gasstrom von der zweiten Kammer 33 über das Einwegventil 11 in die erste Kammer 31 deutlich eingeschränkt oder sogar verhindert ist. Die zweite Kammer 33 ist damit nur über das Einwegventil 11 befüllbar, während die erste Kammer 31 direkt von dem Gasgenerator 7 befüllbar ist.

Weiterhin ist an der ersten Kammer bzw. in der ersten Kammer 31 ein Gasauslass mit einem Gasauslassventil 9 angeordnet. Das Gasauslassventil 9 ist durch eine Steuerung 13 ansteuerbar.

Ferner ist an der zweiten Kammer bzw. in der zweiten Kammer 33 ein Gasauslass mit einem Gasauslassventil 19 angeordnet. Das Gasauslassventil 9 ist ebenfalls durch die Steuerung 13 ansteuerbar.

In Figur 2 sind die strömungsmechanischen Verbindungen zwischen Gasgenerator 7, der ersten Kammer 31, der zweiten Kammer 33 einschließlich des Einwegventils 11, des Gasauslassventils 9 und des Gasauslassventils 19 gezeigt. Ferner ist in Figur 2 eine Steuerung in Form eines Rechtecks 13 gezeigt, die in Wirkverbindung mit dem Gasauslassventil 9 und dem Gasauslassventil 19 steht. Ferner erhält die Steuerung 13 bestimmte Eingangsgrößen, z.B. über einen Zeitablauf, einen Druck und eine Geschwindigkeit des Fahrzeugs.

Im Falle einer Kollision oder einer bevorstehenden Kollision des Kraftfahrzeugs mit einer Person, z.B. einem Fußgänger oder einem Fahrradfahrer, erzeugt die Steuerung 13 ein Aktivierungssignal, das den Gasgenerator 7 aktiviert. Dabei wird Gas aus dem Gasgenerator 7 freigesetzt und in die erste Kammer 31 geblasen. Von der ersten Kammer 31 strömt das Gas durch das Einwegventil 11 in die zweite Kammer 33 über. Somit werden beide Kammern 31 und 33 durch das Gas aus dem Gasgenerator 7 aufgeblasen und der Frontscheibenairbag 3 erstreckt sich über zumindest einen unteren Bereich der Frontscheibe 5 und möglicherweise über die linke und rechte A-Säule (die in den Figuren nicht dargestellt sind). Im Verlaufe der Zeit öffnet die Steuerung 13 abhängig von bestimmten Eingangsgrößen, wie beispielsweise dem Druck p, der abgelaufenen Zeit t, und der Fahrzeuggeschwindigkeit v oder einer Größe der Person, das Gasausfassventil 9. Hierdurch wird der Druck in der ersten Kammer 31 verringert, so dass bei einem Auftreffen der Person auf den Frontscheibenairbag 3 die erste Kammer 31 als energieabsorbierend wirkt, aber ein sogenannter Rückstoßeffekt oder ein rückfedernder Effekt, verhindert wird, bei dem die Person von dem Frontscheibenairbag 3 zurückfedern würde.

Während sich bei der ersten Kammer 31 der Druck reduziert und auch durch das Auftreffen der Person das Volumen reduziert, bleibt in der zweiten Kammer 33 ein höherer Druck aufrechterhalten, da das Gasauslassventil 9 keine Wirkung hinsichtlich der zweiten Kammer 33 hat und das Einwegventil 11 verhindert oder zumindest beschränkt, dass Gas von der zweiten Kammer 33 in die erste Kammer 31 zurückströmt. Das Gasauslassventil 19 bleibt zum Zeitpunkt des Auftreffens der Person geschlossen.

Falls nun durch eine Wucht des Aufpralls, bedingt durch eine hohe Fahrzeuggeschwindigkeit oder eine Größe bzw. ein Gewicht der Person aus der ersten Kammer 31 so viel Gas entweicht, dass die Person in Anlage an die zweite Kammer 33 kommt, wird verhindert, dass die auftreffende Person direkt auf die Frontscheibe 5 trifft, da in der zweiten Kammer 33 noch ausreichend Druck vorhanden ist, so dass ein Durchschlagen der Person durch die zweite Kammer 33 auf die Frontscheibe 5 verhindert ist.

Nach dem Aufprall der Person, ist es erforderlich, den Airbag aus dem Sichtbereich des Fahrers zu holen, so dass der Fahrer das Fahrzeug mit weniger Sichteinschränkung zum Stehen bringen kann. Hierfür wird sowohl das Gasauslassventil 9 geöffnet bzw. weiter geöffnet, um Restgas aus der ersten Kammer 31 auszulassen, als auch das Gasauslassventil 19 geöffnet, um das Gas aus der zweiten Kammer 33 auszulassen. Wenn das Gas aus der ersten Kammer 31 und aus der zweiten Kammer 33 ausgelassen ist, kann der Airbag einfacher durch eine sogenannte Rückholeinrichtung von der Frontscheibe bzw. aus dem Sichtbereich des Fahrers geholt werden.

Selbstverständlich sind auch mehrere Gasauslassventil je Kammer möglich. Es ist auch möglich die erste Kammer 31 mit einem steuerbaren Gasauslassventil zu versehen, mit dem ein Druck in der ersten Kammer 31 gesteuert wird, und einem weiteren Gasausventil zu verstehen, das lediglich der vollständigen Entlüftung der ersten Kammer 31 zum Zwecke der Airbagrückholung dient.

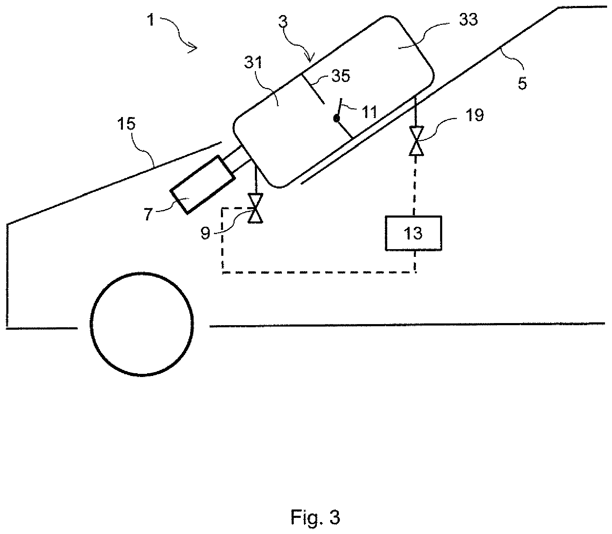

Weiterhin folgt unter Bezugnahme auf Figur 3 eine Beschreibung eines zweiten Ausführungsbeispiels der vorliegenden Erfindung, wobei eine Beschreibung von Merkmalen, die gleich oder ähnlich Merkmalen des ersten Ausführungsbeispiels sind, im Wesentlichen weggelassen ist.

Im Gegensatz zu dem ersten Ausführungsbeispiel sind bei dem zweiten Ausführungsbeispiel eine erste Kammer 31 und eine zweite Kammer 33 hintereinander parallel zu einer Frontscheibe 5 angeordnet. Zwischen der ersten Kammer 31 und der zweiten Kammer 33 ist auch eine Trennwand 35 mit einem Einwegventil 11 ausgebildet. Die erste Kammer 31 weist ein Gasauslassventil 9 auf und die zweite Kammer 33 weist ein Gasauslassventil 19 auf.

Das Gasauslassventil 9 ist derart angesteuert, dass es vor dem Gasauslassventil 19 geöffnet wird. Damit wird in der zweiten Kammer 33 über einen längeren Zeitraum als in der ersten Kammer 31 ein bestimmter Druck aufrechterhalten.

Mit dieser Anordnung der Kammern und Ansteuerung der Gasauslassventile kann ein Aufprall einer kleineren und damit leichteren Person ebenso wie der Aufprall einer größeren und damit schwereren Person bestmöglich abgefangen werden.

Eine kleinere, leichtere Person trifft tendenziell eher in einem unteren Bereich der Frontscheibe 5, d.h. auf die erste Kammer 31 auf. Ferner findet der Aufprall der kleineren, leichteren Person aufgrund der kürzeren Strecke früher statt. Aufgrund beider genannter Gründe ist es sinnvoll, dass der Druck in der ersten Kammer 31 zu einem früheren Zeitpunkt über das Gasauslassventil 9 vermindert wird. Dadurch wird ein Rückpralleffekt der ersten Kammer 31 auf die dort auftreffende kleinere, leichtere Person rechtzeitig vermieden. Außerdem ist die Gefahr eines Durchschlagens auf die Frontscheibe 5 durch die erste Kammer 31 bei einer kleineren, leichteren Person geringer, da diese mit geringerem Gewicht eine geringere Aufprallenergie hat.

Eine größere, schwerere Person trifft bei einem Frontallzusammenstoß mit dem Kraftfahrzeug tendenziell weiter hinten auf die Frontscheibe 5 und damit auf die zweite Kammer 33. Der Aufprall der größeren, schwereren Person erfolgt durch die weitere "Flugstrecke" zu einem späteren Zeitpunkt, so dass es sinnvoll ist, das Gasauslassventil 19 der zweiten Kammer 33 zu einem späteren Zeitpunkt als das Gasauslassventil 9 der ersten Kammer 31 zu öffnen, um zum Einen einen Rückpralleffekt zu verhindern und zum Anderen ein Durchschlagen auf die Frontscheibe 5 zu verhindern.

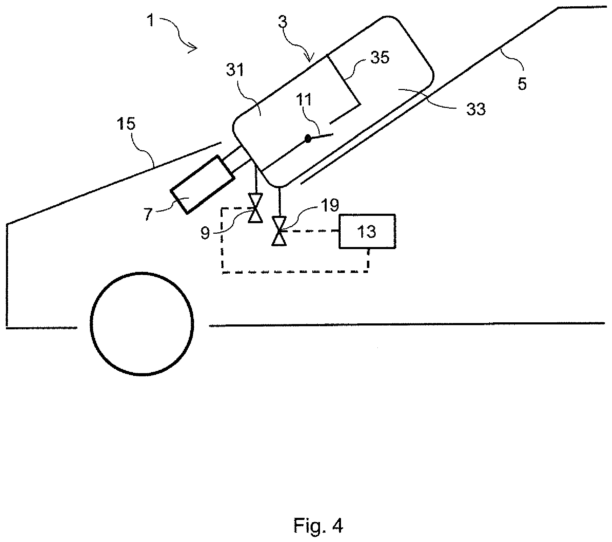

Des Weiteren folgt unter Bezugnahme auf Figur 4 eine Beschreibung eines dritten Ausführungsbeispiels der vorliegenden Erfindung, wobei eine Beschreibung von Merkmalen, die gleich oder ähnlich Merkmalen des ersten und zweiten Ausführungsbeispiels sind, im Wesentlichen weggelassen ist und schwerpunktmäßig die Unterscheide dargestellt sind.

Bei dem dritten Ausführungsbeispiel ist eine zweite Kammer 33 in einem Schnitt entlang der Längsachse und der Hochachse eines Kraftfahrzeugs im Wesentlichen L-förmig ausgebildet, wie in Fig. 4 gezeigt ist, wobei ein erster Schenkel der zweiten Kammer 33 parallel zu einer Frontscheibe 5 verläuft. Eine erste Kammer 31 ist im Wesentlichen zwischen den beiden Schenkeln der L-förmigen zweiten Kammer 33 ausgebildet. Ferner ist die erste Kammer 31 mit einem Gasauslassventil 9 verbunden und ist die zweite Kammer 33 mit einem Gasauslassventil 19 verbunden.

Eine Ansteuerung der Gasauslassventile 9 und 19 erfolgt bei dem dritten Ausführungsbeispiel wie bei dem zweiten Ausführungsbeispiel.

Zusätzlich zu dem zweiten Ausführungsbeispiel wirkt der erste Schenkel der zweiten Kammer 33 im Falle eines Aufpralls einer kleineren, leichteren Person als ein Durchschlagschutz. Mit anderen Worten trifft die Person bei einem möglichen Durchlagen der ersten Kammer 31 auf die zweite Kammer 33, die noch mit einem höheren Gasdruck beaufschlagt ist, weil das Gasauslassventil 19 zu einem späteren Zeitpunkt wie das Gasauslassventil 9 geöffnet wird. Damit ist verhindert, dass die kleinere, leichtere Person nach einem Durchlagen der ersten Kammer 31 direkt auf die Frontscheibe 5 trifft.

Wie vorstehend in der allgemeinen Beschreibung der Erfindung erläutert ist, können die beschriebenen Ausführungsbeispiele durch Anordnung mehrerer erster Kammern und/oder mehrerer zweiter Kammern noch variiert werden.

## Patentansprüche

1. Sicherheitsvorrichtung (1) für ein Kraftfahrzeug, mit einem aufblasbaren Fußgängerschutzairbag (3), der sich im aufgeblasenen Zustand zum Schutz einer aufprallenden Person über eine Frontscheibe (5) des Kraftfahrzeugs erstreckt, einem Gasgenerator (7) zum Aufblasen des Airbag (3) und einem Gasauslass (9) zum Auslassen von Gas aus dem aufgeblasenen Airbag (3), wobei der Airbag (3) eine erste Kammer (31) und eine zweite Kammer (33) aufweist, die in strömungsmechanischer Verbindung stehen, wobei in der strömungsmechanischen Verbindung ein Einwegventil (11) derart angeordnet ist dass eine Gasströmung nur von der ersten Kammer (31) in die zweite Kammer (33) möglich ist, **dadurch gekennzeichnet, dass** der Gasauslass (9) an der ersten Kammer (31) angeordnet ist, wobei die erste Kammer (31) und die zweite Kammer (33) durch eine Trennwand (35) voneinander getrennt sind, und das Einwegventil (11) in der Trennwand (35) angeordnet ist.

2. Sicherheitsvorrichtung für ein Kraftfahrzeug nach Patentanspruch 1, wobei der Gasauslass der ersten Kammer (31) ein steuerbares Gasauslassventil (9) aufweist, wodurch ein Druck in der ersten Kammer (31) vor und/oder während einem Auftreffen der Person auf den Airbag (3) steuerbar ist.

3. Sicherheitsvorrichtung für ein Kraftfahrzeug nach einem der Patentansprüche 1 oder 2, wobei die zweite Kammer (33) einen Gasauslass mit einem Gasauslassventil (19) aufweist, das derart ausgebildet oder angesteuert ist, Gasauslassventil (19) aufweist, das derart ausgebildet oder angesteuert ist, dass es zeitlich nach einem Gasauslass der ersten Kammer (31) aufgemacht wird.

4. Sicherheitsvorrichtung für ein Kraftfahrzeug nach einem der Patentansprüche 1 bis 3, wobei die erste Kammer (31) und die zweite Kammer (33) zumindest abschnittsweise übereinander parallel zu der Frontscheibe angeordnet sind und/oder zumindest abschnittsweise hintereinander parallel zu der Frontscheibe angeordnet sind.

5. Sicherheitsvorrichtung für ein Kraftfahrzeug nach Patentanspruch 4, wobei ein maximales Volumen der ersten Kammer (31) größer als ein maximales Volumen der zweiten Kammer (33) ist.

6. Sicherheitsvorrichtung für ein Kraftfahrzeug nach einem der Patentansprüche 1 bis 5, wobei die zweite Kammer (33) über das Einwegventil (11), insbesondere nur über das Einwegventil (11), mit Gas befüllbar ist.

7. Sicherheitsvorrichtung für ein Kraftfahrzeug nach einem der Patentansprüche 1 bis 6, wobei zwei oder mehr Einwegventile (11) in einer strömungsmechanischen Verbindung oder in mehreren strömungsmechanischen Verbindungen zwischen der ersten Kammer (31) und der zweiten Kammer (33) angeordnet sind.

8. Steuerung einer Sicherheitsvorrichtung für ein Kraftfahrzeug, mit einem aufblasbaren Fußgängerschutzairbag (3), der sich im aufgeblasenen Zustand zum Schutz einer aufprallenden Person über eine einer Frontscheibe (5) des Kraftfahrzeugs erstreckt, einem Gasgenerator (7) zum Aufblasen des Airbag (3) und einem Gasauslass (9) zum Auslassen von Gas aus dem aufgeblasenen Airbag (3), wobei der Airbag (3) eine erste Kammer (31) und eine zweite Kammer (33) aufweist, die in strömungsmechanischer Verbindung stehen, wobei in der strömungsmechanischen Verbindung ein Einwegventil (11) derart angeordnet ist, dass eine Gasströmung nur von der ersten Kammer (31) in die zweite Kammer (33) möglich ist, und wobei der Gasauslass (9) an der ersten Kammer (31) angeordnet ist, **dadurch gekennzeichnet, dass** die erste Kammer (31) und die zweite Kammer (33) durch eine Trennwand (35) voneinander getrennt sind, und das Einwegventil (11) in der Trennwand (35) angeordnet ist, wobei der Airbag (3) bei einer erfassten tatsächlichen Kollision oder einer erfassten bevorstehenden Kollision aufgeblasen wird und der Gasauslass (9) der ersten Kammer (31) geöffnet wird, so dass ein Druckunterschied zwischen der ersten Kammer (31) und der zweiten Kammer (33) entsteht, bevor und/oder während eine Person auf den Airbag (3) aufprallt.

9. Steuerung nach Patentanspruch 8, wobei der Gasauslass (9) der ersten Kammer (31) abhängig von einer oder mehreren Bedingungen, insbesondere von einem bestimmen Druck und/oder einem bestimmten Zeitpunkt, geöffnet wird.

## Claims

1. A safety device (1) for a motor vehicle, with an inflatable pedestrian-protection airbag (3) which in the inflated state in order to protect a person colliding with the vehicle extends over a windscreen (5) of the motor vehicle, a gas generator (7) for inflating the airbag (3) and a gas outlet (9) for letting gas out of the inflated airbag (3), wherein the airbag (3) has a first chamber (31) and a second chamber (33) which are in a fluidic connection, wherein a one-way valve (11) is arranged in the fluidic connection in such a way that a flow of gas is possible only from the first chamber (31) into the second chamber (33), **characterised in that** the gas outlet (9) is arranged on the first chamber (31), wherein the first chamber (31) and the second chamber (33) are separated from each other by a partition (35), and the one-way valve (11) is arranged in the partition (35).

2. A safety device for a motor vehicle according to Claim 1, wherein the gas outset of the first chamber (31) has a controllable gas outlet valve (9), by which a pressure in the first chamber (31) can be controlled before and/or while the person strikes the airbag (3).

3. A safety device for a motor vehicle according to one of Claims 1 or 2, wherein the second chamber (33) has a gas outlet with a gas outlet valve (19) which is formed or controlled in such a way that it is opened chronologically after a gas outlet of the first chamber (31).

4. A safety device for a motor vehicle according to one of Claims 1 to 3, wherein the first chamber (31) and the second chamber (33) are arranged at least in sections one above the other parallel to the windscreen and/or are arranged at least in sections one behind another parallel to the windscreen.

5. A safety device for a motor vehicle according to Claim 4, wherein a maximum volume of the first chamber (31) is greater than a maximum volume of the second chamber (33).

6. A safety device for a motor vehicle according to one of Claims 1 to 5, wherein the second chamber (33) can be filled with gas via the one-way valve (11), epecially only via the one-way valve (11).

7. A safety device for a motor vehicle according to one of Claims 1 to 6, wherein two or more one-way valves (11) are arranged in a fluidic connection or in a plurality of fluidic connections between the first chamber (31) and the second chamber (33).

8. Control of a safety device for a motor vehicle with an inflatable pedestrian-protection airbag (3) which in the inflated state in order to protect a person colliding with the vehicle extends over a a windscreen (5) of the motor vehicle, a gas generator (7) for inflating the airbag (3) and a gas outlet (9) for letting gas out of the inflated airbag (3), wherein the airbag (3) has a first chamber (31) and a second chamber (33) which are in fluidic connection, wherein a one-way valve (11) is arranged in the fluidic connection in such a way that a flow of gas is possible only from the first chamber (31) into the second chamber (33), and wherein the gas outlet (9) is arranged on the first chamber (31), **characterised in that** the first chamber (31) and the second chamber (33) are separated from each other by a partition (35), and the one-way valve (11) is arranged in the partition (35), wherein the airbag (3) in the event of a detected actual collision or a detected imminent collision is inflated and the gas outlet (9) of the first chamber (31) is opened, so that a pressure difference between the first chamber (31) and the second chamber (33) is produced, before and/or while a person strikes the airbag (3).

9. Control according to Claim 8, wherein the gas outlet (9) of the first chamber (31) is opened as a function of one or more conditions, epecially of a specific pressure and/or a specific time.

## Revendications

1. Dispositif de sécurité (1) destiné à un véhicule automobile équipé d'un airbag de protection des piétons (3) pouvant être gonflé, qui, à l'état gonflé, s'étend sur le pare-brise (5) du véhicule pour permettre de protéger une personne qui le percute, un générateur de gaz (7) permettant de gonfler l'airbag (3) et une sortie de gaz (9) permettant à du gaz de s'échapper de l'airbag (3) gonflé, l'airbag (3) comprenant une première chambre (31) et une seconde chambre (33) qui sont en liaison fluidique mécanique, dans la liaison fluidique mécanique une soupape unidirectionnelle (11) étant montée de sorte que la circulation de gaz ne soit possible que de la première chambre (31) vers la seconde chambre (33),
**caractérisé en ce que**
la sortie de gaz (9) est située sur la première chambre (31), la première chambre (31) et la seconde chambre (33) sont séparées par une paroi de séparation (35) et la soupape unidirectionnelle (11) est située dans la paroi de séparation (35).

2. Dispositif de sécurité destiné à un véhicule automobile, conforme à la revendication 1,
dans lequel la sortie de gaz de la première chambre (31) comporte une soupape d'échappement de gaz commandable (9), permettant de commander la pression dans la première chambre (31) avant et/ou pendant le choc d'une personne avec l'airbag (3).

3. Dispositif de sécurité destiné à un véhicule automobile, conforme à l'une des revendications 1 et 2,
dans lequel la seconde chambre (33) comporte une sortie de gaz (9) équipée d'une soupape d'échappement de gaz (19) qui est réalisée ou commandée de façon à être ouverte après la sortie de gaz de la première chambre (31).

4. Dispositif de sécurité destiné à un véhicule automobile, conforme à l'une des revendications 1 à 3,
dans lequel la première chambre (31) et la seconde chambre (33) sont positionnées au moins par segments l'une au-dessus de l'autre parallèlement au pare-brise et/ou au moins partiellement l'une derrière l'autre parallèlement au pare-brise.

5. Dispositif de sécurité destiné à un véhicule automobile, conforme à la revendication 4,
dans lequel le volume maximum de la première chambre (31) est supérieur au volume maximum de la seconde chambre (33).

6. Dispositif de sécurité destiné à un véhicule automobile, conforme à l'une des revendications 1 à 5,
dans lequel la seconde chambre (33) peut être remplie de gaz par l'intermédiaire de la soupape unidirectionnelle (11) et en particulier uniquement par l'intermédiaire de la soupape unidirectionnelle (11).

7. Dispositif de sécurité destiné à un véhicule automobile, conforme à l'une des revendications 1 à 6,
dans lequel au moins deux soupapes unidirectionnelles (11) sont montées dans une liaison fluidique mécanique ou dans plusieurs liaisons fluidiques mécaniques entre la première chambre (31) et la seconde chambre (33).

8. Système de commande d'un dispositif de sécurité destiné à un véhicule automobile équipé d'un airbag de protection des piétons gonflable (3) qui s'étend, à l'état gonflé, sur le pare-brise (5) du véhicule pour permettre de protéger une personne qui le percute, un générateur de gaz (7) permettant de gonfler l'airbag (3) et une sorte de gaz (9) permettant à du gaz de s'échapper de l'airbag (3) gonflé, l'airbag (3) comprenant une première chambre (31) et une seconde chambre (33) situées en liaison fluidique mécanique, dans la liaison fluidique mécanique une soupape unidirectionnelle (11) étant montée de sorte que la circulation de gaz ne soit possible que de la première chambre (31) vers la seconde chambre (33), et la sortie de gaz (9) étant située sur la première chambre (31),
**caractérisé en ce que**
la première chambre (31) et la seconde chambre (33) sont séparées par une paroi de séparation (35) et la soupape unidirectionnelle (11) est montée dans la paroi de séparation (35), lors de la détection d'une collision effective ou d'une collision imminente, l'airbag (3) étant gonflé et la sortie de gaz (9) de la première chambre (31) étant ouverte de sorte qu'une différence de pression s'établisse entre la première chambre (31) et la seconde chambre (33) avant et/ou pendant qu'une personne vienne percuter l'airbag (3).

9. Système de commande conforme à la revendication 8,
dans lequel la sortie de gaz (9) de la première chambre (31) s'ouvre en fonction d'une ou de plusieurs conditions, en particulier en fonction d'une pression définie et/ou d'un instant défini.
